# EUROPEAN PATENT SPECIFICATION

(11) **EP 3 334 200 B1**
(45) Date of publication and mention of the grant of the patent: **14.04.2021**
(21) Application number: 16203477.1
(22) Date of filing: 12.12.2016
(51) Int. Cl.: H04W 16/14

(54) **BASE STATION AND MOBILE STATION CIRCUITRIES FOR COEXISTING ACCESS OF FIRST AND SECOND RADIO COMMUNICATION**
BASISSTATIONS- UND MOBILSTATIONSSCHALTUNGEN FÜR KOEXISTIERENDEN ZUGRIFF EINER ERSTEN UND EINER ZWEITEN FUNKKOMMUNIKATION
STATION DE BASE ET CIRCUITERIES DE STATION DE BASE MOBILE POUR UN ACCÈS COEXISTANT DE LA PREMIÈRE ET DE LA SECONDE RADIOCOMMUNICATION

(43) Date of publication of application: 13.06.2018
(73) Proprietor: Intel IP Corporation, Santa Clara, CA 95054 (US)
(72) Inventor: MUECK, Markus Dominik, 85579 Neubiberg (DE)
(74) Representative: Viering, Jentschura & Partner mbB Patent- und Rechtsanwälte

(56) References cited:
- WO-A1-2015/103632
- WO-A2-2012/057590
- WO-A2-2013/112983

## Description

### FIELD

The disclosure relates to a circuitry, in particular a base station (BS) circuitry for transceiving a radio frame in a dedicated frequency band which is dedicated for coexisting access of a first radio communication scheme and a second radio communication scheme. The disclosure further relates to a circuitry, in particular a mobile station circuitry for transceiving a radio frame in the above-indicated dedicated frequency band. The disclosure particularly relates to management for WiFi and LAA/MuLTEfire radio communication, in particular in the 5GHz frequency band.

### BACKGROUND

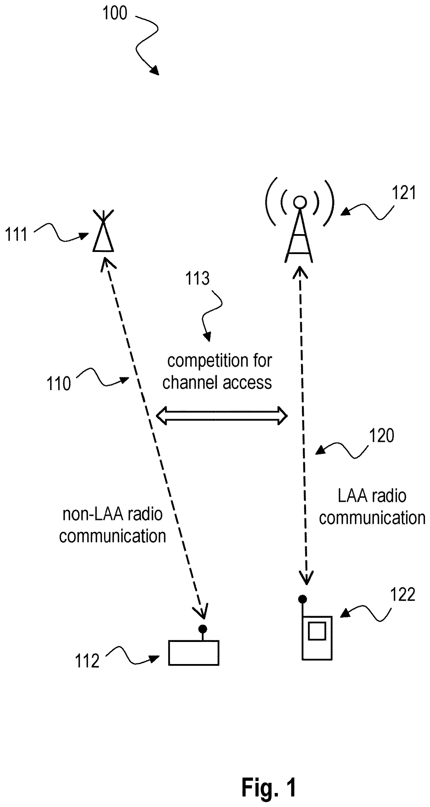

Currently there is competition for channel access 113 in the 5 GHz ISM (Industrial Scientific Medical) frequency band by LAA and MuLTEfire radio communication 110 (e.g. LTE) and non-LAA radio communication (e.g. WiFi). Figure 1 shows a radio communication system 100 including two coexisting radio access technologies. LAA and MuLTEfire radio communication 110 is between eNodeB or base station (BS) 121 and user equipment (UE) or mobile device 122 while WiFi radio communication is between access point (AP) 111 and mobile station (STA) 112. It may thus be desirable to provide a concept for efficient usage of the above-indexed dedicated frequency band by both radio access technologies.

ETSI BRAN standardization "ETSI EN 301 893, 5 GHz high performance RLAN; Harmonized Standard covering the essential requirements of article 3.2 of the Directive 2014/53/EU, Draft 0.0.7" currently defines parameter sets for equipment operation in 5GHz ISM bands, ensuring coexistence in particular for WiFi and LAA/MuLTEfire. In particular, new TxOP (*Transmit Opportunity*) parameter sets have been recently defined. In particular, it may be desirable to provide a concept how to best use the new TxOP parameter sets in a SU (Single User) and MU (MultiUser) MIMO set-up and how to handle the management of contention window management and allocation of UL (Uplink) resources in the context of LAA / MuLTEfire (i.e., LTE being operated in 5GHz ISM bands).

### BRIEF DESCRIPTION OF THE DRAWINGS

The accompanying drawings are included to provide a further understanding of aspects and are incorporated in and constitute a part of this specification. The drawings illustrate aspects and together with the description serve to explain principles of aspects. Other aspects and many of the intended advantages of aspects will be readily appreciated as they become better understood by reference to the following detailed description. Like reference numerals designate corresponding similar parts.
Fig. 1 is a schematic diagram illustrating a radio communication system 100 including two coexisting radio access technologies competing for channel access.
Fig. 2 is a schematic diagram illustrating a radio frame 200 including a downlink (DL) section, an uplink (UL) section and a pause section according to the disclosure.
Fig. 3 is block diagram of a base station circuitry 300 according to the disclosure.
Fig. 4 is block diagram of a mobile station circuitry 400 according to the disclosure.
Fig. 5 is a schematic diagram illustrating the detailed frame structure 500 for WiFi with pause for DL/UL separation (no aggregation) according to the disclosure.
Fig. 6 is a schematic diagram illustrating the detailed frame structure 600 for WiFi with pause for DL/UL separation (with A-MPDU aggregation) according to the disclosure.
Fig. 7 is a schematic diagram illustrating the detailed frame structure 700 for WiFi with pause for DL/UL separation (with A-MSDU aggregation) according to the disclosure.
Fig. 8 is a schematic diagram illustrating the detailed frame structure 800 for WiFi with pause for DL/UL separation (with A-MPDU of A-MSDU aggregation) according to the disclosure.
Fig. 9 is a schematic diagram illustrating the frame structure 900 of MuLTEfire.
Fig. 10 is a schematic diagram illustrating the frame structure 1000 of MuLTEfire including Pause according to the disclosure.
Fig. 11 is a schematic diagram illustrating the frame structure 1100 of MuLTEfire including Pause (splitting the punctured symbol) according to the disclosure.
Fig. 12 is a schematic diagram illustrating the frame structure 1200 of MuLTEfire including Pause (moving the punctured symbol) according to the disclosure.
Fig. 13 is a schematic diagram illustrating the frame structure 1100 of MuLTEfire including Pause (extending the punctured symbol throughout the waiting period) according to the disclosure.
Fig. 14 is a schematic diagram illustrating WiFi VoIP transmission 1400 starting within the 100 microseconds pause in the WiFi evolution frame according to the disclosure.
Fig. 15 is a schematic diagram illustrating WiFi VoIP transmission 1500 starting within the 100 microseconds pause in the MuLTEfire frame according to the disclosure.
Fig. 16 is a schematic diagram illustrating a method 1600 for increasing the 100 microseconds pause in the LAA/MuLTEfire frame according to the disclosure.
Fig. 17 is a schematic diagram illustrating a method 1700 for adaptation of backoff durations prior to transmission opportunities (TxOPs) according to the disclosure.
Fig. 18 is a schematic diagram illustrating a channel access procedure 1800 with contention window size depending on TxOP duration according to the disclosure.
Fig. 19 is a schematic diagram illustrating the frame structure 1900 with UL Sounding according to the disclosure.
Fig. 20 is a schematic diagram illustrating a method 2000 for processing a radio frame according to the disclosure.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention, which is defined by the appended claims.

The following terms, abbreviations and notations will be used herein.
- 3GPP:: 3rd Generation Partnership Project,
- LTE:: Long Term Evolution,
- LTE-A:: LTE Advanced, Release 10 and higher versions of 3GPP LTE,
- BS:: Base station, eNodeB,
- RF:: Radio Frequency,
- UE:: User Equipment,
- OFDM:: Orthogonal Frequency Division Multiplex,
- NodeB:: base station,
- MIMO:: Multiple Input Multiple Output,
- TDD:: Time Division Duplex,
- FDD:: Frequency Division Duplex,
- TxOP:: Transmission Opportunity

The methods and devices described herein are based on coexisting radio communication of license-assisted access (LAA) and non-license assisted access. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards such as LTE, in particular LTE-A and/or OFDM. The methods and devices described below may further be implemented in a base station (NodeB, eNodeB) or a mobile station. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

The methods and devices described herein after may be designed in accordance to mobile communication standards such as e.g. the Long Term Evolution (LTE) standard or the advanced version LTE-A thereof. LTE (Long Term Evolution), marketed as 4G, 5G LTE and beyond, is a standard for wireless communication of high-speed data for mobile phones and data terminals. The methods and devices described hereinafter may be applied in LTE FDD mode systems and in LTE TDD mode systems. The methods and devices described hereinafter may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

The methods and devices described hereinafter may be applied in WiFi and Bluetooth systems or any near field communication (NFC) technology. WiFi is a local area wireless computer networking technology that allows electronic devices, also referred to as mobile stations or simply stations (STAs) to connect to the network, mainly using the 2.4 gigahertz (12 cm) UHF and 5 gigahertz (6 cm) SHF ISM radio bands. The Wi-Fi Alliance defines Wi-Fi as any "wireless local area network" (WLAN) product based on the IEEE 802.11 standards. However, the term "Wi-Fi" is used in general English as a synonym for WLAN since most modern WLANs are based on these standards. Many devices can use WiFi, e.g. personal computers, video-game consoles, smartphones, digital cameras, tablet computers and digital audio players. These

can connect to a network resource such as the Internet via a wireless network access point (AP). Such an access point (or hotspot) has a range of about 20 meters indoors and a greater range outdoors.

Bluetooth is a wireless technology standard for exchanging data over short distances (using short-wavelength UHF radio waves in the ISM band from 2.4 to 2.485 GHz) from fixed and mobile devices, and building personal area networks (PANs). It can connect several devices, overcoming problems of synchronization.

The methods and devices described hereinafter may be applied in MIMO systems. Multiple-input multiple-output (MIMO) wireless communication systems employ multiple antennas at the transmitter and at the receiver to increase system capacity and to achieve better quality of service. In spatial multiplexing mode, MIMO systems may reach higher peak data rates without increasing the bandwidth of the system by transmitting multiple data streams in parallel in the same frequency band.

In the context of this disclosure, "stand-alone" means that the LAA system can be used in an unlicensed or license-by-rule band or shared band (or any band other than exclusively licensed band) alone without requiring a second frequency carrier (being operated jointly, sequentially in time or simultaneously in time). Such a second frequency carrier typically relates to a dedicated licensed frequency band, such as an LTE dedicated licensed frequency band. Also note that the stand-alone system typically relates to LAA but the approach is generic and can be applied to any communication protocol (possibly after suitable modifications, including mechanisms for protection of an incumbent system for example). Also note that the stand-alone system may be part of a hierarchy, for example in the case of LAA in 3.5 GHz shared spectrum, the highest priority is typically given to the incumbent, the second highest priority to a PAL User (Priority Access License User) - if available in the target band - and the third highest priority to a GAA User (General Authorized Access user) which is typically governed under the license-by-rule framework of the FCC (in other regions similar or slightly different schemes may exist which allow quasi-unlicensed operation while protecting a higher priority user).

It is understood that the basic principles are applicable to any suitable frequency band and any suitable radio access technology. In particular, it is suitable for systems operating in unlicensed bands (such as 2.4 GHz ISM band and 5 GHz ISM bands), license-by-rule bands (such as 3.5 GHz GAA operation in the US under FCC's license-by-rule framework), shared bands (such as TVWS bands, e.g. in Europe from 470-790 MHz, where systems as as IEEE802.11af may operate) and any other type of bands. The proposed schemes are in particular optimized for TDD operation, however, they may be adapted to any other type of operation, including FDD. Alternatively, non-TDD systems, such as FDD systems or others, may be adapted in order to operate under the conditions detailed in this disclosure; this may for example be achieved by adding a (optional or non-optional) TDD mode or any other suitable mode to the currently existing stand. Then, the approach detailed in this disclosure can be applied to any communication system and in particular to the following systems: Infrastructure equipment or mobile devices or any other equipment operating according to certain 3GPP (Third Generation Partnership Project) specifications, notably Long Term Evolution (LTE) and Long Term Evolution-Advanced (LTE-A), a 5th Generation (5G) communication systems, a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology (e.g. UMTS (Universal Mobile Telecommunications System), FOMA (Freedom of Multimedia Access), 3GPP LTE (Long Term Evolution), 3GPP LTE Advanced (Long Term Evolution Advanced)), CDMA2000 (Code division multiple access 2000), CDPD (Cellular Digital Packet Data), Mobitex, 3G (Third Generation), CSD (Circuit Switched Data), HSCSD (High-Speed Circuit-Switched Data), UMTS (3G) (Universal Mobile Telecommunications System (Third Generation)), W-CDMA (UMTS) (Wideband Code Division Multiple Access (Universal Mobile Telecommunications System)), HSPA (High Speed Packet Access), HSDPA (High-Speed Downlink Packet Access), HSUPA (High-Speed Uplink Packet Access), HSPA+ (High Speed Packet Access Plus), UMTS-TDD (Universal Mobile Telecommunications System - Time-Division Duplex), TD-CDMA (Time Division - Code Division Multiple Access), TD-CDMA (Time Division - Synchronous Code Division Multiple Access), 3GPP Rel. 8 (Pre-4G) (3rd Generation Partnership Project Release 8 (Pre-4th Generation)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP LTE Extra, LTE Licensed-Assisted Access (LAA), UTRA (UMTS Terrestrial Radio Access), E-UTRA (Evolved UMTS Terrestrial Radio Access), LTE Advanced (4G) (Long Term Evolution Advanced (4th Generation)), cdmaOne (2G), CDMA2000 (3G) (Code division multiple access 2000 (Third generation)), EV-DO (Evolution-Data Optimized or Evolution-Data Only), AMPS (1G) (Advanced Mobile Phone System (1st Generation)), TACS/ETACS (Total Access Communication System/Extended Total Access Communication System), D-AMPS (2G) (Digital AMPS (2nd Generation)), PTT (Push-to-talk), MTS (Mobile Telephone System), IMTS (Improved Mobile Telephone System), AMTS (Advanced Mobile Telephone System), OLT (Norwegian for Offentlig Landmobil Telefoni, Public Land Mobile Telephony), MTD (Swedish abbreviation for Mobiltelefonisystem D, or Mobile telephony system D), Autotel/PALM (Public Automated Land Mobile), ARP (Finnish for Autoradiopuhelin, "car radio phone"), NMT (Nordic Mobile Telephony), Hicap (High capacity version of NTT (Nippon Telegraph and Telephone)), CDPD (Cellular Digital Packet Data), Mobitex, DataTAC, iDEN (Integrated Digital Enhanced Network), PDC (Personal Digital Cellular), CSD (Circuit Switched Data), PHS (Personal Handy-phone System), WiDEN (Wideband Integrated Digital Enhanced Network), iBurst, Unlicensed Mobile Access (UMA, also referred to as also referred to as 3GPP Generic Access Network, or GAN standard)), Wireless Gigabit Alliance (WiGig) standard, mmWave standards in general (wireless systems operating at 10-90 GHz and above such as WiGig, IEEE 802.11ad, IEEE 802.11ay, etc.), etc. Note in particular that the proposed scheme may be applied to so called cmWave (3-30 GHz) and mmWave (30-300 GHz) band systems and at frequencies beyond those. Such sharing scenarios may be coming up in other bands below 6GHz but also above 6GHz, e.g. in the mmWave bands. The same principles may apply there.

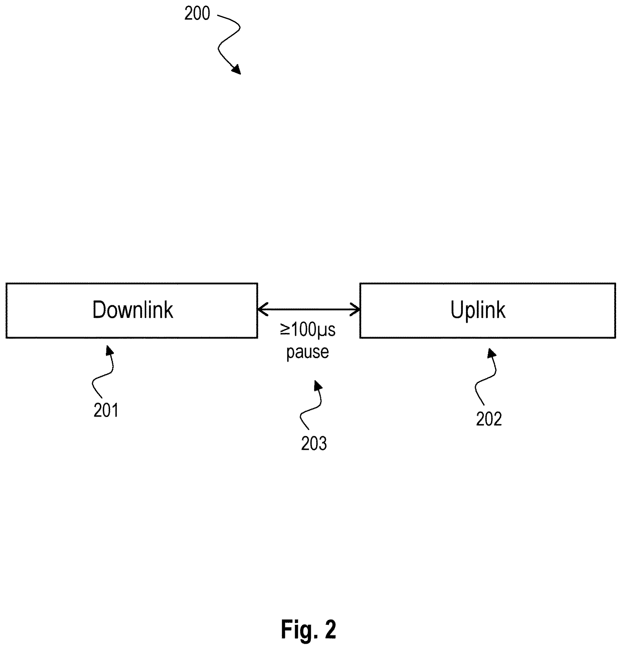

Fig. 2 is a schematic diagram illustrating a radio frame 200 including a downlink (DL) section, an uplink (UL) section and a pause section according to the disclosure.

In the harmonized ETSI standard covering the essential requirements of article 3.2 of the EU directive 2014/53/EU *"*ETSI EN 301 893, 5 GHz high performance RLAN; Harmonized Standard covering the essential requirements of article 3.2 of the Directive 2014/53/EU, V2.0.0, 2015-06*"* coexistence between different radio access technologies (RATs) in the 5 GHz high performance Radio Access Network (RAN) is defined. The need for a pause is defined to allow accessing the 5 GHz frequency band by the respective competing RATs. However, the standard does not detail i) where exactly this pause is to be inserted into the frame and ii) how to separate the frame into two parts.

Fig. 2 shows an implementation for a standard compatible radio frame in which the pause or pause section 203 is included between the downlink (DL) section 201 and the uplink (UL) section 202. This pause section 203 is usually greater or equal than 100 microseconds. However, according to the specific requirements, there are possible implementations in which this pause section 203 may also be less than 100 microseconds. Such pause section 203 allows mutual access of the radio channel to the competing RATs.

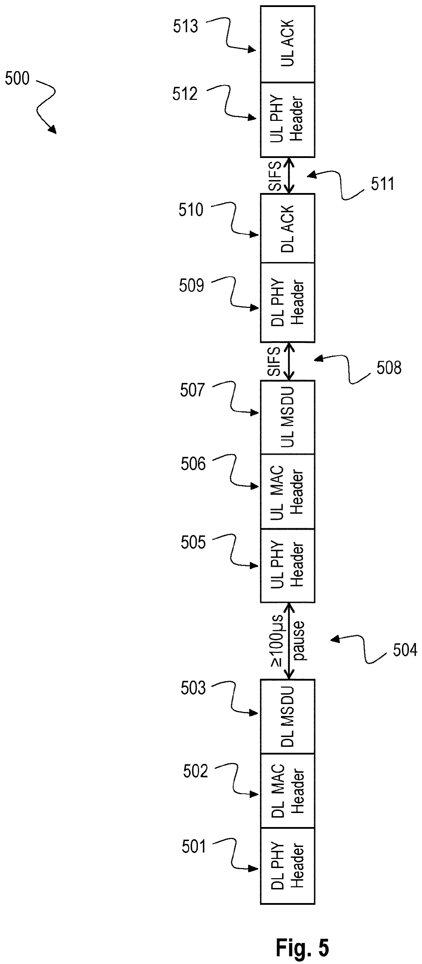

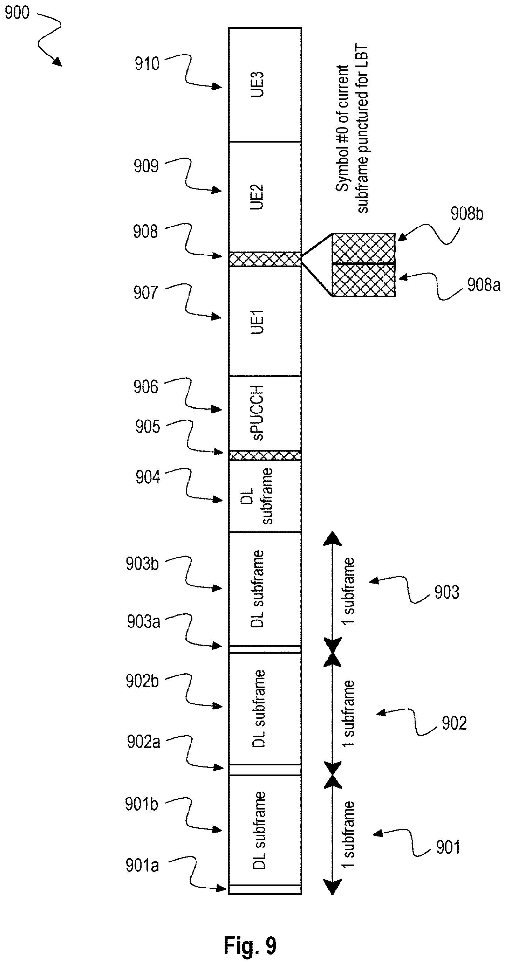

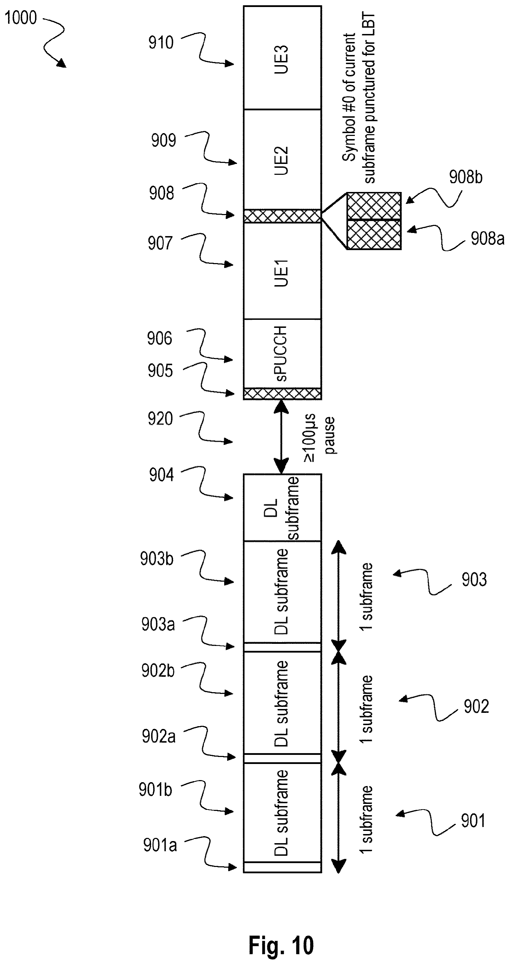

Hence, Fig. 2 illustrates the key concept defining where to apply the pause period in the specific target frame structure. In the following Figures 5 to 8 this concept is applied to the WiFi frame structure for WiFi evolution such as IEEE 802.11ax and further frame structures. In Figure 9 this concept is applied to the MuLTEfire frame structure.
Further changes in the MuLTEfire frame (exploiting recent progress on the frame-structure in the MuLTEfire alliance) are illustrated in Figures 10 to 13, in particular the following changes are described:

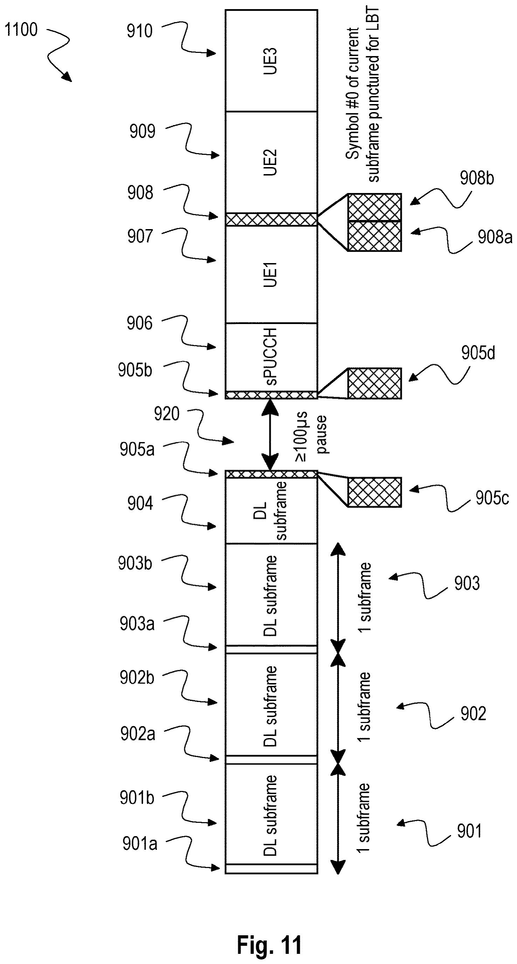

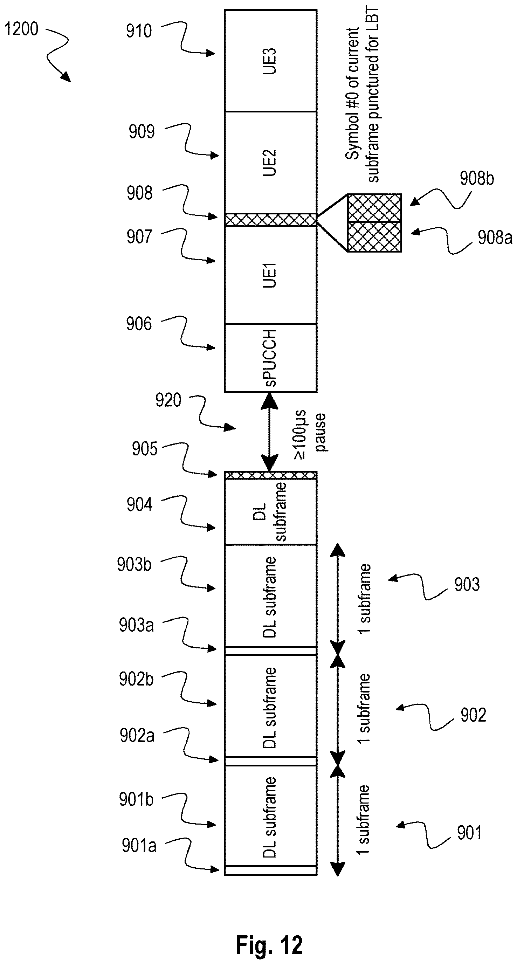

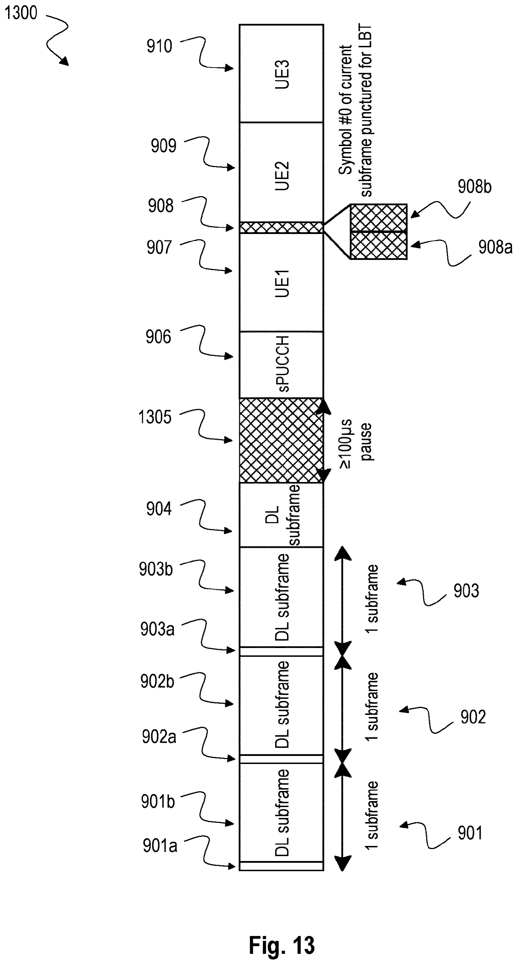

Before the sPUCCH frame, there is a punctured symbol for LBT. When the 100us separation is introduced, the question is what happens with this symbol. Several ways are presented: i) Fig. 10 and Fig. 12 illustrate how this symbol can be located directly before or after the pause, ii) Fig. 11 illustrates how this symbol (used for LBT) can be split into two parts. One part is used just before the LBT and the other part is used just afterwards. Fig. 13 illustrates how the pause period can be filled with energy such that only devices knowing this frame property can recognize the "filling" symbol and identify the subsequent channel access possibility. This prevents sporadic channel loss due to the fact that any system can detect the pause and start transmitting - which de-facto terminates the transmission opportunity for the other party.

The different frame structures as described in the following present possible implementations of the above indexed harmonized ETSI standard for WiFi/LAA Coexistence. In particular, in implementations described hereinafter, the following conditions are met: 1) A 8ms TxOP (transmission opportunity) is allowed under the following condition: "minimum duration of a pause shall be 100 µs" (see harmonized ETSI standard). Implementations are presented using this pause for separation of DL/UL scheduled transmissions for LAA. 2) 10ms TxOPs require an increased Contention Window size compared to smaller TxOPs (see harmonized ETSI standard). Implementations are presented in which a random number generator is re-initialized. 3) For 8ms TxOP with a pause, implementations with a VoIP station are presented which scan for the 8ms header in order to predict the location of the pause and then schedule the VoIP transmission correspondingly to coincide with the pause.

The dynamic change of the TxOP times is very new and was just included into the above indexed harmonized ETSI standard EN 301 893. Classical implementations do not deal with this and would thus use the worst case (highest values) contention window parameter set for all TxOP cases, i.e. for 10ms TxOPs and for shorter ones. This would be highly inefficient.

Also, the requirement for a pause in the transmission is novel and does not exist in classical implementations. It is best to include the pause 203 in scheduled LAA/MuLTEfire transmissions between the DL/UL portions 201, 202 as shown in Fig. 2 in order to allow for scheduling/propagation/processing delays.

The above indexed harmonized ETSI standard EN 301 893 requires for 8ms TxOPs to use a >=100us pause: "The *maximum Channel Occupancy Time (COT) of 6 ms may be increased to 8 ms by inserting one or more pauses. The minimum duration of a pause shall be 100 µs. The maximum duration (Channel Occupancy) before including any such a pause shall be 6 ms. Pause duration is not included in the channel occupancy time."* (see section 4.2.7.3.2.4, Table 7, Note 1). However, it is not described where in the frame this pause should be added. Note also that the 100us value may be modified in the future or additional pause parameters can be introduced, e.g. mandated for specific TxOP time (e.g. 100us pause for 8ms TxOP, 200us pause for 10ms TxOP, or any other configuration); all examples below are made for 100us pause times but any other pause duration may be applied as required.

The option for combining longer Maximum Channel Occupany Times (MCOTs) with a pause (>= 100us) is expected to be exploited for all types of systems in the 5GHz ISM band including: 1) WiFi evolution (systems such as IEEE 802.11ax may provide an option for a central resource management and thus longer frames enabled by the pause will play a role); 2) MuLTEfire and/or LAA, since it is benefical for those systems to have longer pause periods. While in WiFi, each AP (Access Point) and STA (Station) compete for channel access independently, LAA/MuLTEfire will use a scheduled system where the eNB allocates UL slots to the STAs/UEs. It is thus advantageous to include the >=100us pause 203 for separation between the DL 201 and UL phase 202 as shown in Fig. 2. The above indexed harmonized ETSI standard EN 301 893 describes only the insertion of the pause but not the detailed aggregation structures. Implementations of such structures are described in the sequel.

Note that the above described coexistence of different radio communication schemes within the dedicated frequency band is not limited to LAA/MuLTEfire systems and WiFi systems, any other radio communication technologies can coexist within the dedicated frequency band as well. For example a first radio communication scheme can coexist with a second radio communication scheme. For example, a pause can be introduced with the objective that legacy WiFi systems (and future WiFi and other systems) can exploit the pause to start a transmission. Actually, when the corresponding legacy "Listen Before Talk (LBT)" function detects that the channel is unoccupied, the legacy system can start transmitting and thus interrupts the further transmission of the LAA/MuLTEfire system. For LAA/MuLTEfire, the resource is lost after the pause if the legacy system starts to transmit. In another example, a legacy system (e.g., legacy WiFi, any future WiFi flavor, any other CSMA based system, etc.) can interrupt an ongoing transmission of another system (such as MuLTEfire) which includes a pause into the transmission. Such an interruption is indeed not possible in common legacy systems, since no such pause is inserted. The disclosure presents different examples where the pause can be inserted in the frame, e.g. as follows: 1) The pause (or multiple pauses) can be included in the DL transmission. 2) The pause (or multiple pauses) can be included in the UL transmission. 3) The pause can be included between the DL and UL transmission. 4) The pause (or multiple pauses) can be included in the DL transmission and between the DL and UL transmission. 5) The pause (or multiple pauses) can be included in the UL transmission and between the DL and UL transmission. 6) The pause (or multiple pauses) can be included in the DL transmission and in the UL transmission and between the DL and UL transmission.

In one generic example: i) DL and UL can be grouped together in the unlicensed band and ii) a frame duration can be used which is sufficient to allow the receiver to decode the DL, identify whether there are transmission errors and then to send immediately the HARQ retransmission requests in the UL part. This typically isn't possible in a WiFi frame (6ms) because the decoding of a packet typically has an inherent latency of 3-4ms. Assume that the DL sequence is 3ms long, then the decoding results would only be available 3ms later (i.e., 3+3ms=6ms) and that is too late for the WiFi frame. That is why the frame duration is typically extended to 8ms or 10ms in order to leave enough space. Also, when the DL part is short, the pause inserted between DL and UL can be chosen such that enough time is available to decode the first DL transmission and to be ready for the first UL transmission slot to send a corresponding HARQ request if required. For example, if the DL duration after the first packet is 2.7ms, the pause may be chosen to be ∼0.3ms in order to have a total receiver processing time of ∼2.7+0.3ms=3ms. Then, the receiver is ready to request the HARQ retransmission just when the UL part starts.

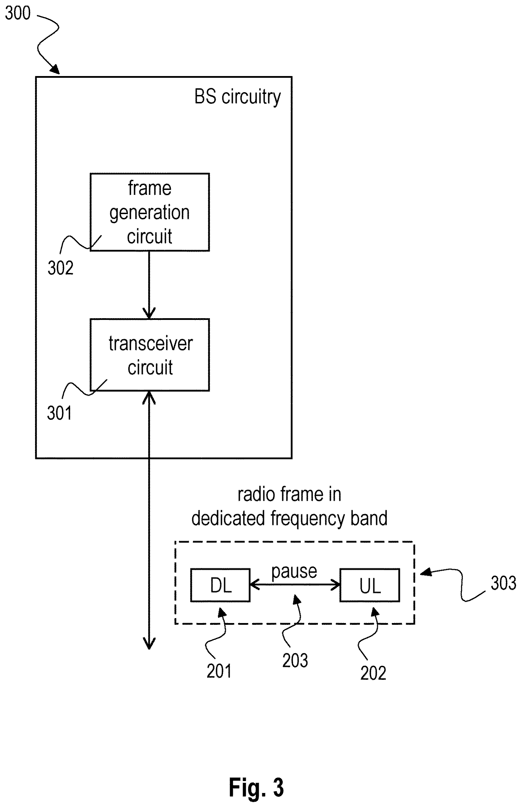

Fig. 3 is block diagram of a base station circuitry 300 according to the disclosure. The base station circuitry 300 supports coexistence of different radio access technologies (RATs) as described above in particular WiFi evolutions and MuLTEfire/LAA by processing the novel frame structure 200 described above with respect to Fig. 2 and detailed in Figures 5 to 13. The base station circuitry 300 includes a transceiver circuit 301 and a frame generation circuit 302. The transceiver circuit 301 transceives a radio frame 303 in a dedicated frequency band which is dedicated for coexisting access of a license assisted access (LAA) based radio communication scheme and a non-LAA based radio communication scheme. The frame generation circuit 302 generates the radio frame 303 based on a downlink (DL) section 201, an uplink (UL) section 202 and at least one pause section 203, i.e. according to the frame structure 200 described above with respect to Fig. 2, to allow the non-LAA based radio communication scheme accessing the dedicated frequency band during the at least one pause section. The frame generation circuit 302 inserts the at least one pause section 203 between the DL section 201 and the UL section 202. Note that one or many pause sections 203 may be included in the frame 303.

There are different implementations possible for inserting the pause section 203 which are described in the following: The at least one pause section 203 may have a time duration of at least 100 microseconds. The frame generation circuit 302 may insert the at least one pause section 203 into the radio frame 303 after a maximum channel occupancy time of 6 milliseconds.

The frame generation circuit 302 may separate the downlink section 201 from the uplink section 202 of the radio frame 303 by the at least one pause section 203.
The dedicated frequency band may be the 5 GHz Industrial, Scientific and Medical (ISM) band. The non-LAA based radio communication scheme may include a WiFi communication scheme. The LAA based radio communication scheme may include a MuLTEfire communication scheme. The dedicated frequency band may be dedicated for coexisting access according to the ETSI EN 301 893 specification, i.e. the above described harmonized ETSI standard.

In one implementation, the frame generation circuit 302 may generate the radio frame as a non-aggregated data frame, e.g. a frame 500 as shown in Fig. 5. In this implementation, the frame generation circuit 302 may generate the radio frame 500 as a WiFi frame including the following sequence of data fields: a DL PHY header 501, a DL MAC header 502, a DL MAC Service Data Unit (MSDU) field 503, the pause section 504, an UL PHY header 505, an UL MAC header 506, an UL MSDU field 507, a short interframe space (SIFS) 508, a further DL PHY header 509, a DL ACK field 510, a further SIFS 511, a further UL PHY header 512, an UL ACK field 513.

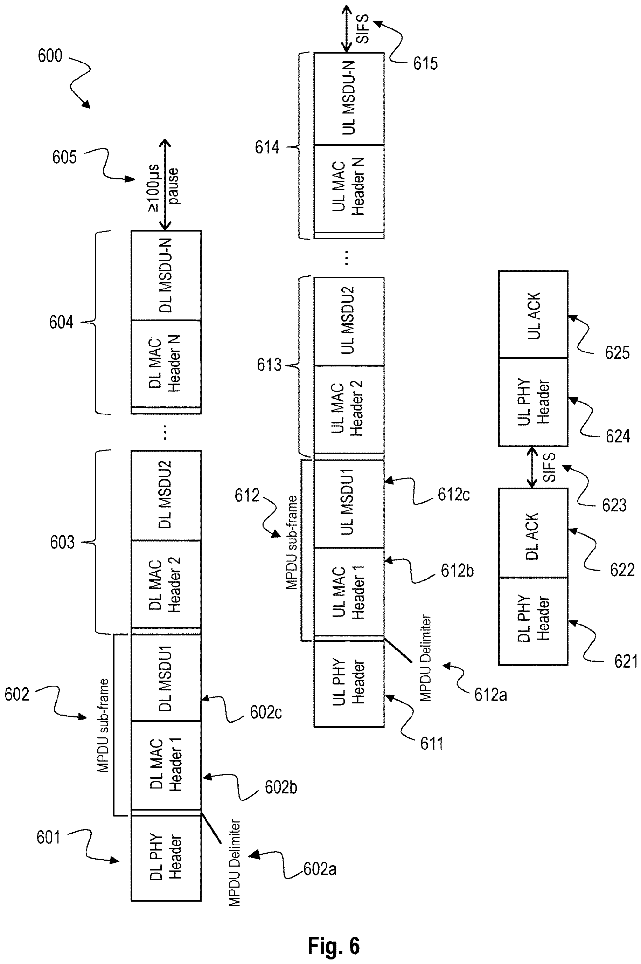

In one implementation, the frame generation circuit 302 may generate the radio frame as an aggregated data frame, e.g. a frame 600, 700, 800 as shown in Figs. 6, 7, 8. In this implementation, the frame generation circuit 302 may generate the radio frame 600, 700, 800 as an Aggregated MAC Protocol Data Unit (A-MPDU) data frame 600, an Aggregated MAC Service Data Unit (A-MSDU) data frame 700 or an A-MPDU of A-MSDU data frame 800.

In the case of Aggregated MAC Protocol Data Unit (A-MPDU) data frame 600, the frame generation circuit 302 may generate the radio frame 600 as a WiFi frame including the following sequence of data fields: a DL PHY header 601, a plurality of MPDU DL subframes 602, 603, 604, each MPDU DL subframe including a MPDU delimiter 602a, a DL MAC header 602b and a DL MSDU field 602c, the pause section 605, an UL PHY header 611, a plurality of MPDU UL subframes 612, 613, 614, each MPDU UL subframe including a MPDU delimiter 612a, an UL MAC header 612b and an UL MSDU field 612c, a SIFS 615, a further DL PHY header 621, a DL ACK field 622, a further SIFS 623, a further UL PHY header 624, an UL ACK field 625. Note that the described sequence is the preferred sequence of data fields, however, other sequencing of these data fields or part of these data fields is possible.

In the case of Aggregated MAC Service Data Unit (A-MSDU) data frame 700, the frame generation circuit 302 may generate the radio frame 700 as a WiFi frame including the following sequence of data fields: a DL PHY header 701, a DL MAC header 702, a plurality of A-MSDU DL subframes 703, 704, 705, each A-MSDU DL subframe including an A-MSDU subframe header 703a and a DL MSDU field 703b, the pause section 706, an UL PHY header 711, an UL MAC header 712, a plurality of A-MSDU UL subframes 713, 714, 715, each A-MSDU UL subframe including an A-MSDU subframe header 713a and an UL MSDU field 713b, a SIFS 716, a further DL PHY header 721, a DL ACK field 722, a further SIFS 723, a further UL PHY header 724, an UL ACK field 725. Note that the described sequence is the preferred sequence of data fields, however, other sequencing of these data fields or part of these data fields is possible.

In the case of A-MPDU of A-MSDU data frame 800, the frame generation circuit 302 may generate the radio frame 800 as a WiFi frame including the following sequence of data fields: a DL PHY header 801, a plurality of MPDU DL subframes 802, 803, each MPDU DL subframe comprising an MPDU delimiter 802a, a DL MAC header 802b and a plurality of A-MSDU DL subframes 802c, 802f, wherein each A-MSDU DL subframe comprises an A-MSDU subframe header 802d and a DL MSDU field 802e, the pause section 808, an UL PHY header 811, a plurality of MPDU UL subframes 812, 813, each MPDU UL subframe including an MPDU delimiter 812a, an UL MAC header 812b and a plurality of A-MSDU UL subframes 812c, 812f, wherein each A-MSDU UL subframe includes an A-MSDU subframe header 812d and an UL MSDU field 812e, a SIFS 818, a further DL PHY header 821, a DL ACK field 822, a further SIFS 823, a further UL PHY header 824, an UL ACK field 825. Note that the described sequence is the preferred sequence of data fields, however, other sequencing of these data fields or part of these data fields is possible.

In one implementation, the frame generation circuit 302 may generate the radio frame as a MuLTEfire frame 900 including the following sequence of data fields: a plurality of DL subframes 901, 902, 903, 904, a punctured symbol 905, a short Physical Uplink Control Channel (sPUCCH) field 906 and a plurality of UL subframes 907, 909, 910. The pause section may be inserted at one of the following locations: before the punctured symbol 905 before the sPUCCH field 906 as shown in Fig. 10, between a first part and a second part of the punctured symbol 905 before the sPUCCH field 906 as shown in Fig. 11, after the punctured symbol 905 and before the sPUCCH field 906 as shown in Fig. 12. Note that the described sequence is the preferred sequence of data fields, however, other sequencing of these data fields or part of these data fields is possible.

In one implementation, the frame generation circuit 302 may generate the radio frame 1300 as a MuLTEfire frame as shown in Fig. 13 including the following sequence of data fields: a plurality of DL subframes 901, 902, 903, 904, a punctured symbol 1305, a short Physical Uplink Control Channel (sPUCCH) field 906 and a plurality of UL subframes 907, 909, 910. The time duration of the punctured symbol 1305 may be extended to a predetermined time duration of the pause section 203, e.g. to a time of greater or equal than 100 microseconds, and the punctured symbol 1305 may be used as the pause section 203. Note that the described sequence is the preferred sequence of data fields, however, other sequencing of these data fields or part of these data fields is possible.

The base station circuitry 300 may further include a frame detection circuit to detect a neighboring transmission of a second radio frame, e.g. a concurrent transmission, in the dedicated frequency band during the at least one pause section 203. The frame detection circuit 300 may detect the neighboring transmission based on a Listen-Before-Talk (LBT) included in the second radio frame. The transceiver circuit 301 may be configured to delay transceiving the UL section 202 of the radio frame 303 when a neighboring transmission is detected.

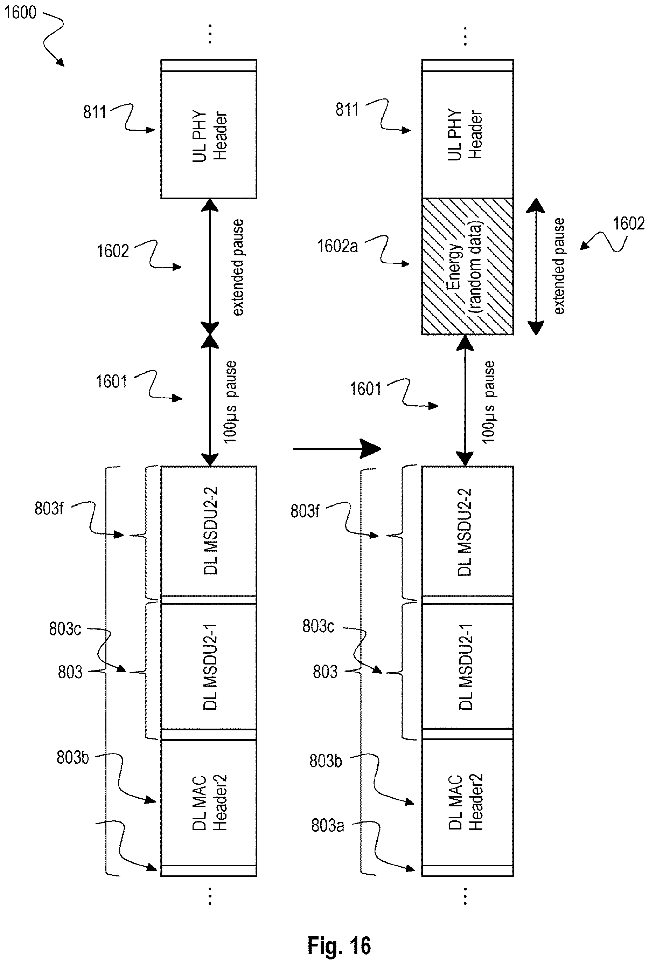

In one implementation, the frame generation circuit 302 may insert at least one extended pause section 1602 in the radio frame 1600 as shown in Fig. 16. The at least one extended pause section 1602 may include random data 1602a to prevent other devices from accessing the dedicated frequency band during the at least one extended pause section 1602. The frame generation circuit 302 may insert the at least one extended pause section 1602 after the at least one pause section 1601 as shown in Fig. 16. The frame generation circuit 302 may align a time duration of the at least one extended pause section 1602 with a given processing time for processing at least part of the radio frame 1600 in a user equipment (UE). This provides the advantage that the UE can just start uplink transmission (beginning with UL PHY Header 811) after the extended pause section 1602 or 1602a.

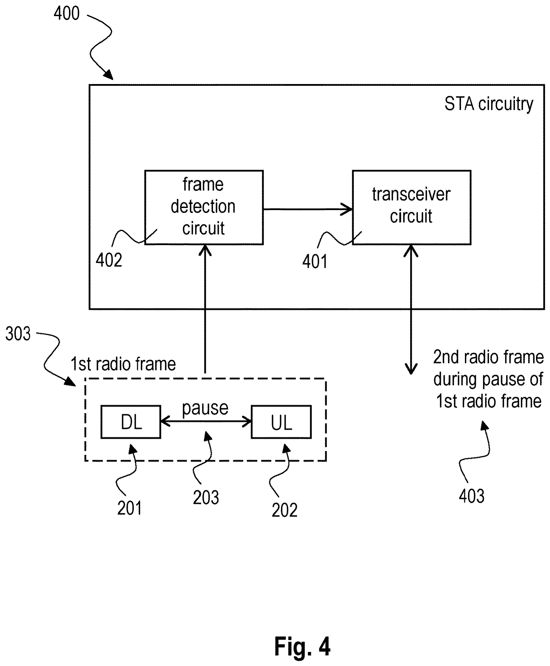

Fig. 4 is block diagram of a mobile station circuitry 400 according to the disclosure. The mobile station circuitry 400 supports coexistence of different radio access technologies (RATs) as described above in particular WiFi evolutions and MuLTEfire/LAA by processing the novel frame structure 200 described above with respect to Fig. 2 and detailed in Figures 5 to 13.

The mobile station circuitry 400 includes a transceiver circuit 401 and a frame detection circuit 402. The transceiver circuit 401 transceives a second radio frame 403 in a dedicated frequency band which is dedicated for coexisting access of a license assisted access (LAA) based radio communication scheme and a non-LAA based radio communication scheme. The frame detection circuit 402 is configured to detect a neighboring transmission of a first radio frame 303, e.g. a radio frame 303 as described above with respect to Fig. 3, in the dedicated frequency band. The first radio frame 303 includes a downlink (DL) section 201, an uplink (UL) section 202 and at least one pause section 203 which is inserted between the DL section and the UL section, as described above with respect to Fig. 2. The transceiver circuit 401 is configured to transceive the second radio frame 403 during the at least one pause section 203 of the first radio frame 303.

The frame detection circuit 402 may identify a location of the pause section 203 of the first radio frame 303 based on decoding scheduling information comprised in the first radio frame 303.

The transceiver circuit 401 may schedule a contention procedure for accessing the dedicated frequency band such that access to the dedicated frequency band is obtained during the at least one pause section 203 of the first radio frame 303.

Fig. 5 is a schematic diagram illustrating the detailed frame structure 500 for WiFi with pause for DL/UL separation (no aggregation) according to the disclosure.

Note that the pause is initially intended to support LAA/MuLTEFire. However, this pause may also become relevant for future evolutions of WiFi, such as IEEE 802.11ax where a polling/scheduling based access to the medium is likely to happen. Without data aggregation (data is in a single MSDU = MAC Service Data Unit), the detailed frame structure is typically as shown in Figure 5 (this is based on WiFi terminology as it is expected to be defined in IEEE 802.11ax, in LAA/MuLTEfire the basic principles also apply however with slightly different terminology).

The radio frame 500 is a WiFi frame including the following sequence of data fields: a DL PHY header 501, a DL MAC header 502, a DL MAC Service Data Unit (MSDU) field 503, the pause section 504, an UL PHY header 505, an UL MAC header 506, an UL MSDU field 507, a short interframe space (SIFS) 508, a further DL PHY header 509, a DL ACK field 510, a further SIFS 511, a further UL PHY header 512, an UL ACK field 513. Note that the described sequence is the preferred sequence of data fields, however, other sequencing of these data fields or part of these data fields is possible.

Fig. 6 is a schematic diagram illustrating the detailed frame structure 600 for WiFi with pause for DL/UL separation (with A-MPDU aggregation) according to the disclosure.

The radio frame 600 is a WiFi frame including the following sequence of data fields: a DL PHY header 601, a plurality of MPDU DL subframes 602, 603, 604, each MPDU DL subframe including a MPDU delimiter 602a, a DL MAC header 602b and a DL MSDU field 602c, the pause section 605, an UL PHY header 611, a plurality of MPDU UL subframes 612, 613, 614, each MPDU UL subframe including a MPDU delimiter 612a, an UL MAC header 612b and an UL MSDU field 612c, a SIFS 615, a further DL PHY header 621, a DL ACK field 622, a further SIFS 623, a further UL PHY header 624, an UL ACK field 625. Note that the described sequence is the preferred sequence of data fields, however, other sequencing of these data fields or part of these data fields is possible.

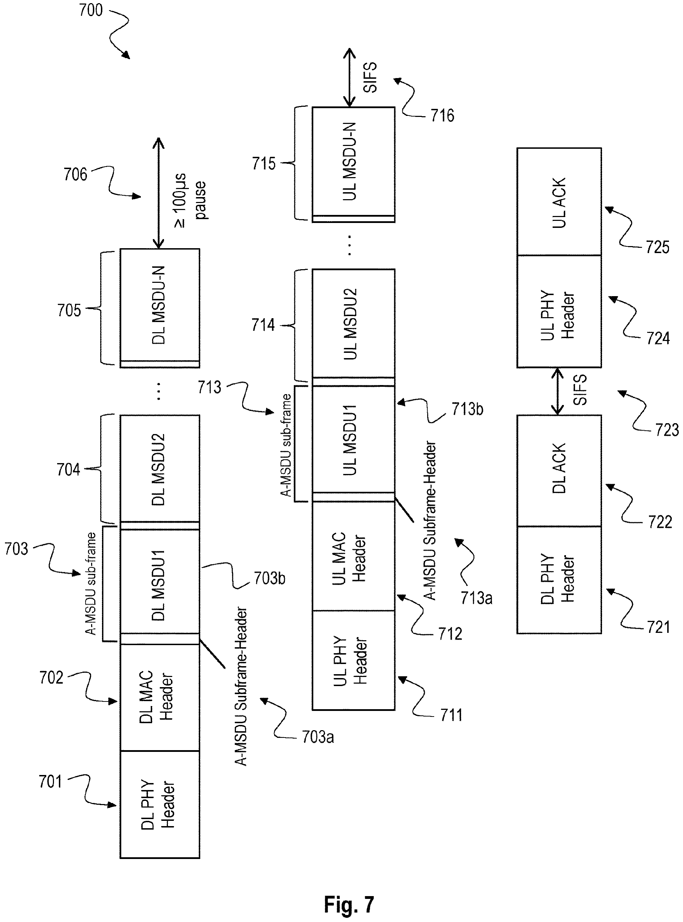

Fig. 7 is a schematic diagram illustrating the detailed frame structure 700 for WiFi with pause for DL/UL separation (with A-MSDU aggregation) according to the disclosure.

The radio frame 700 is a WiFi frame including the following sequence of data fields: a DL PHY header 701, a DL MAC header 702, a plurality of A-MSDU DL subframes 703, 704, 705, each A-MSDU DL subframe including an A-MSDU subframe header 703a and a DL MSDU field 703b, the pause section 706, an UL PHY header 711, an UL MAC header 712, a plurality of A-MSDU UL subframes 713, 714, 715, each A-MSDU UL subframe including an A-MSDU subframe header 713a and an UL MSDU field 713b, a SIFS 716, a further DL PHY header 721, a DL ACK field 722, a further SIFS 723, a further UL PHY header 724, an UL ACK field 725. Note that the described sequence is the preferred sequence of data fields, however, other sequencing of these data fields or part of these data fields is possible.

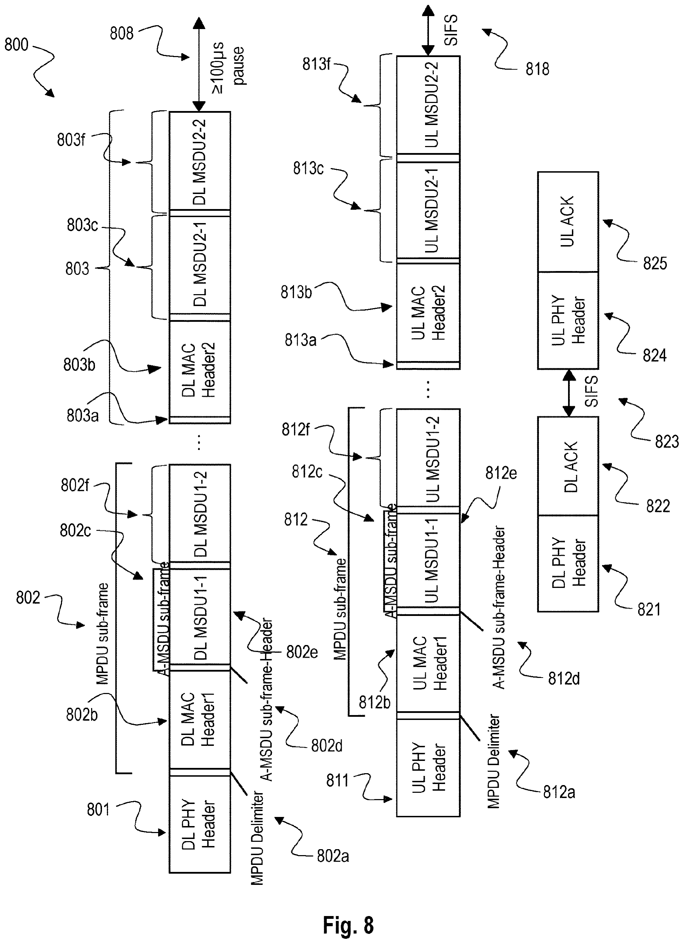

Fig. 8 is a schematic diagram illustrating the detailed frame structure 800 for WiFi with pause for DL/UL separation (with A-MPDU of A-MSDU aggregation) according to the disclosure.

The radio frame 800 is a WiFi frame including the following sequence of data fields: a DL PHY header 801, a plurality of MPDU DL subframes 802, 803, each MPDU DL subframe comprising an MPDU delimiter 802a, a DL MAC header 802b and a plurality of A-MSDU DL subframes 802c, 802f, wherein each A-MSDU DL subframe comprises an A-MSDU subframe header 802d and a DL MSDU field 802e, the pause section 808, an UL PHY header 811, a plurality of MPDU UL subframes 812, 813, each MPDU UL subframe including an MPDU delimiter 812a, an UL MAC header 812b and a plurality of A-MSDU UL subframes 812c, 812f, wherein each A-MSDU UL subframe includes an A-MSDU subframe header 812d and an UL MSDU field 812e, a SIFS 818, a further DL PHY header 821, a DL ACK field 822, a further SIFS 823, a further UL PHY header 824, an UL ACK field 825. Note that the described sequence is the preferred sequence of data fields, however, other sequencing of these data fields or part of these data fields is possible.

For the frame structures depicted in Figures 5 to 8, the following considerations should be observed: 1) The DL ACK may be added just after the UL transmissions without adding a SIFS period. 2) The UL ACK may optionally be omitted, since the fact that an UL transmission occurs proves inherently that the DL information was correctly received, at least the part which contains the UL grant information. The DL Ack may optionally also be limited to those packets which do not contain UL grant information. 3) The ">=100us" pause has a minimum duration of 100us but the actual duration needs to be determined, typically by the eNB. It is proposed that the eNB estimates the scheduling delay, the propagation delay and processing delay required in the STAs/UEs and chooses a pause duration which will finally accommodate for those delays. In case that there are different target STAs/UEs, typically the requirements of the most demanding STA/UE are used in order to determine the exact pause duration. If the pause requirement is below 100us, the pause is set to the minimum value, i.e. 100us. The same considerations also hold for the design of the BS circuitry 300 and the STA circuitry 400 described above with respect to Figures 3 and 4.

Fig. 9 is a schematic diagram illustrating the frame structure 900 of MuLTEfire. Currently, the MuLTEfire alliance progresses on the definition of the MuLTEfire frame and the current proposal (without pause section) is shown in Fig. 9.

The radio frame 900 is a MuLTEfire frame 900 including the following sequence of data fields: a plurality of DL subframes 901, 902, 903, 904, a punctured symbol 905, a short Physical Uplink Control Channel (sPUCCH) field 906 and a plurality of UL subframes 907, 909, 910. The first subframe 901 may include a PDCCH (Physical Downlink Control Channel) section 901a and a DL subframe section 901b. The second subframe 902 may include a PDCCH section 902a and a DL subframe section 902b. The third subframe 903 may include a PDCCH section 903a and a DL subframe section 903b. A further punctured symbol 908 including a first part 908a and a second part 908b may be arranged between UL subframes 907 and 909. This second part 908b may include a single interval LBT (Listen Before Transmission) symbol. The plurality of UL subframes 907, 909, 910 may include PUSH/ePUCCH (Physical Uplink Shared Channel / extended Physical Uplink Control Channel) transmissions.

The pause section according to the disclosure may be inserted at one of the following locations: before the punctured symbol 905 before the sPUCCH field 906 as shown in Fig. 10, between a first part and a second part of the punctured symbol 905 before the sPUCCH field 906 as shown in Fig. 11, after the punctured symbol 905 and before the sPUCCH field 906 as shown in Fig. 12. Note that the described sequence is the preferred sequence of data fields, however, other sequencing of these data fields or part of these data fields is possible.

Fig. 10 is a schematic diagram illustrating the frame structure 1000 of MuLTEfire including Pause according to the disclosure. The radio frame 1000 corresponds to the radio frame 900 shown in Fig. 9, where the pause section 920 is inserted before the punctured symbol 905 before the sPUCCH field 906.

Fig. 11 is a schematic diagram illustrating the frame structure 1100 of MuLTEfire including Pause (splitting the punctured symbol) according to the disclosure. In this alternative frame structure, the Punctured Symbol just before the sPUCCH is split in half and the first part is attached the previous DL subframe while the 2^{nd} part is attached to the sPUCCH.

The radio frame 1100 corresponds to the radio frame 900 shown in Fig. 9, where the pause section 920 is inserted between a first part 905a and a second part 905b of the punctured symbol 905. The first part may include a punctured symbol 905c, the second part 905b may include a single interval LTB field 905d.

Fig. 12 is a schematic diagram illustrating the frame structure 1200 of MuLTEfire including Pause (moving the punctured symbol) according to the disclosure. In this additional option, the punctured symbol is entirely moved to the DL subframe. The radio frame 1200 corresponds to the radio frame 900 shown in Fig. 9, where the pause section 920 is inserted after the punctured symbol 905 and before the sPUCCH field 906.

Fig. 13 is a schematic diagram illustrating the frame structure 1100 of MuLTEfire including Pause (extending the punctured symbol throughout the waiting period) according to the disclosure. In this frame structure, the punctured symbol is extended throughout the waiting time in case that only specific devices can access the medium, having knowledge on this specific feature (all other devices would detect energy and thus decide not to access the medium).

The radio frame 1300 is a MuLTEfire frame including the following sequence of data fields: a plurality of DL subframes 901, 902, 903, 904, a punctured symbol 1305, a short Physical Uplink Control Channel (sPUCCH) field 906 and a plurality of UL subframes 907, 909, 910. The time duration of the punctured symbol 1305 may be extended to a predetermined time duration of the pause section 203, e.g. to a time of greater or equal than 100 microseconds, and the punctured symbol 1305 may be used as the pause section 203. Note that the described sequence is the preferred sequence of data fields, however, other sequencing of these data fields or part of these data fields is possible.

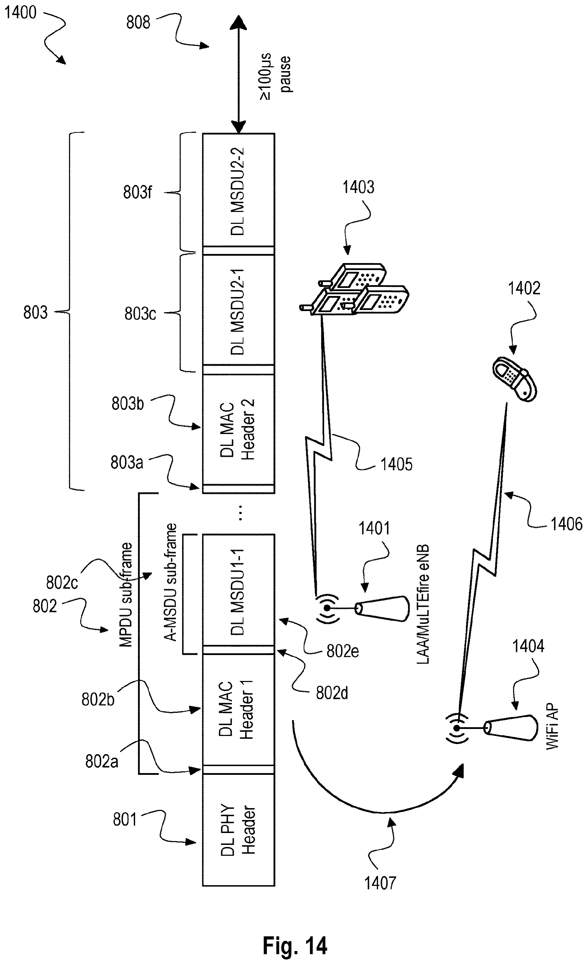

Fig. 14 is a schematic diagram illustrating WiFi VoIP transmission 1400 starting within the 100 microseconds pause in the WiFi evolution frame according to the disclosure.

The frame may correspond to the WiFi frame 800 described above with respect to Fig. 8. A first transmission 1405, e.g. according to LTE, is active between an LAA/MuLTEfire eNB 1401 and one or more UEs 1403. A second, coexisting transmission 1406 is active between a WiFi access point (AP) 1404 and a mobile station (STA) 1402. Both transmissions 1405, 1406 are on the dedicated frequency band, e.g. the ISM band. The LAA/MuLTEfire eNB 1401 may include a BS circuitry 300 as described above with respect to Fig. 3. The STA 1402 and also the AP 1404 may include a STA circuitry 400 as described above with respect to Fig. 4.

The pause 808 of >=100us in the 8ms TxOP case (or in any other case for which such a pause may be mandated, e.g. such a pause may also be introduced for a 10ms TxOP and/or a 6ms TxOP), the pause 808 can in particular be exploited by WiFi devices 1404, 1402 for VoIP transmissions 1406.

One approach is that WiFi STAs 1402 observe the LAA/MuLTEfire frames 800 from neighboring transmissions and identify the location of the pause 808 through decoding of the scheduling information, e.g. in the DL MAC Header field 802b shown in Fig 14. The transmission of the VoIP frames is then scheduled such that the pause period 808 is met, e.g. through suitable start of the contention procedure for channel access, through suitable scheduling/polling as it is expected to be the case in the future IEEE 802.11ax, or similar.

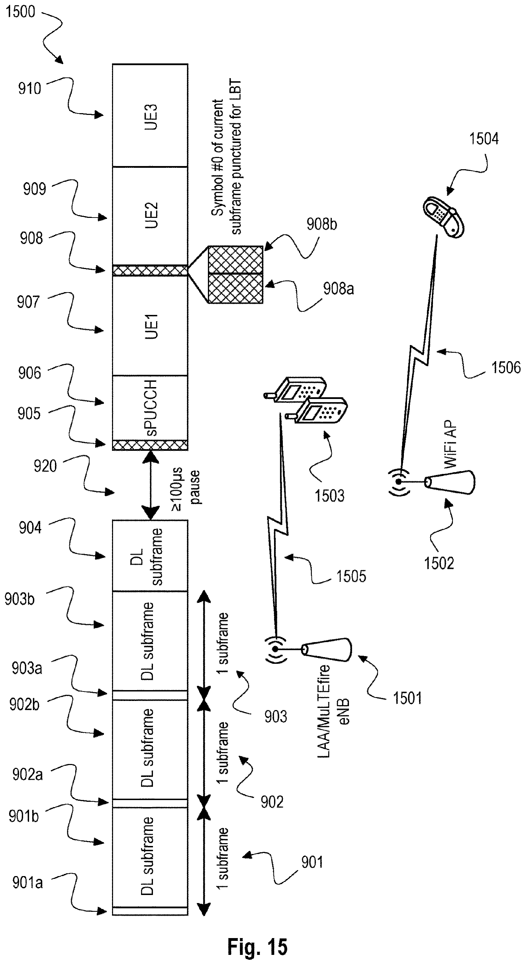

Note that the VoIP transmission 1406 can exceed the duration of the >=100us pause 808. If it does, the LAA/MuLTEfire system 1401, 1403 cannot continue its operation after the pause 808, the presence of VoIP is detected by LAA/MuLTEfire through a (short) LBT (Listen-Before-Talk). The basic principle is illustrated in Fig. 14 for the WiFi evolution frame structure and in Fig. 15 for the MuLTEfire frame structure.

Fig. 15 is a schematic diagram illustrating WiFi VoIP transmission 1500 starting within the 100 microseconds pause in the MuLTEfire frame according to the disclosure.

The frame may correspond to the MuLTEfire frame 1000 described above with respect to Fig. 10. A first transmission 1505, e.g. according to LTE, is active between an LAA/MuLTEfire eNB 1501 and one or more UEs 1503. A second, coexisting transmission 1506 is active between a WiFi access point (AP) 1502 and a mobile station (STA) 1504. Both transmissions 1505, 1506 are on the dedicated frequency band, e.g. the ISM band. The LAA/MuLTEfire eNB 1501 may include a BS circuitry 300 as described above with respect to Fig. 3. The STA 1504 and also the AP 1502 may include a STA circuitry 400 as described above with respect to Fig. 4.

The same principles as described above with respect to Fig. 15 for the WiFi frame 800 also apply for the MuLTEfire frame 1000 in the scenario of Fig. 15.

Fig. 16 is a schematic diagram illustrating a method 1600 for increasing the 100 microseconds pause in the LAA/MuLTEfire frame according to the disclosure.

The frame may correspond to the WiFi frame 800 described above with respect to Fig. 8 in which an extended pause section 1602 is appended to the pause section 1601.

The pause 1601 in the 8ms TxOP (or possibly for other TxOP durations in the future, such as possibly 6ms, 10ms, 12ms, 9ms, etc.) is defined to be of minimum 100 microseconds according to the standard. Any other pause times may be defined in the future and the solution given here can also be applied to any such pause durations.

The problem with the pause is that another device may gain access to the channel during the pause 1601 (it is interpreted as being an unused medium). In such a case, the original transmission including the pause (typically a LAA/MuLTEfire transmission or possibly also a future IEEE 802.11ax transmission) will lose the channel and will not be able to continue its information exchange. From this perspective, it is thus preferable to keep the pause 1601 to a strict minimum in order to reduce the possibility for losing the rest of the TxOP.

On the other hand, it may be useful in some cases to increase the pause 1601 in order to accommodate for scheduling delays, propagation delays, processing delays, etc. Figure 16 depicts a solution to that problem in order to i) reduce the probability for other systems grabbing the channel during the pause and ii) still allowing for the required pause time in order to accommodate for scheduling delays, propagation delays, processing delays, etc.

According to the implementation of Fig. 16, the solution is to fill the transmission after the 100 microseconds minimum pause duration phase 1601 with random energy 1602a until the end of the pause (e.g., create standard data packets (A-MPDUs or similar) which are loaded with random data). This random energy 1602a will prevent other equipment from accessing the channel when they perform an LBT after the 100us minimum pause duration period 1601. Of course, this method does not prevent other equipment from accessing the channel when the LBT is performed within the first 100us of the pause 1601 - however, this is exactly desired since it will allow for an ongoing efficient usage of VoIP even in the presence of LAA/MuLTEfire.

In the implementation of Fig. 16, the time of the extended pause 1602 may be adjusted to a decoding time of the UE. Then the UE is able to decode DL data and continue transmission of UL data as the corresponding UL data section is available just after the decoding. This mechanism can be used to improve the HARQ procedure where data packets are retransmitted.

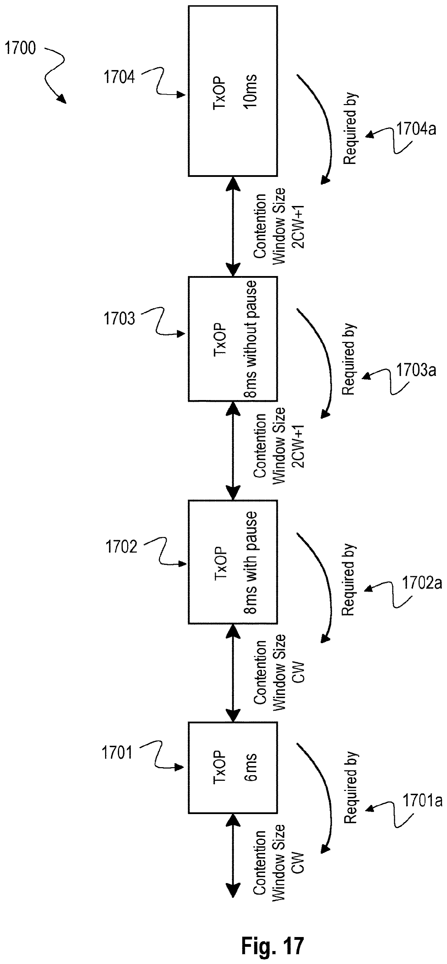

Fig. 17 is a schematic diagram illustrating a method 1700 for adaptation of backoff durations prior to transmission opportunities (TxOPs) according to the disclosure. Such adaptation of backoff duration is an alternative mechanism to provide a sufficient pause section in the frame transmission as described before.

Between various transmission opportunities (TxOP) 1701, 1702, 1703, 1704, the contention window sizes can be changed according to the requirements. For example, in a first TxOP 1704 a contention window size of 2*CW+1 is required 1704a; in a second TxOP 1703 a contention window size of 2*CW+1 is required 1703a; in a third TxOP 1702 a contention window size of CW is required 1702a; and in a fourth TxOP 1701 a contention window size of CW is required 1701a as shown in Fig. 17.

The idea is that the device has prior knowledge about the time that is required to transmit, e.g. depending on the data size or the processing power or bandwidth, etc. Based on that prior knowledge the device can adapt the backoff durations prior to the respective transmission opportunities.

The standard EN 301 893 defines different contention window sizes (backoff) for various TxOP lengths. In particular, for a 10ms TxOP period a different set of contention window parameters is used compared to the other TxOP period lengths <10ms as required by EN 301 893: "The *maximum Channel Occupancy Time (COT) of 6 ms may be exceeded to 10 ms by extending CW to CW* × *2* + *1 when selecting the random number q for any backoff(s) that precede or follow the Channel Occupancy that exceeded 6 ms. The choice between preceding or following a Channel Occupancy shall remain unchanged during the operation time of the device".*

Between the various transmissions of a *Supervising Device,* the backoff times are thus changing as illustrated by Figure 17.

In one implementation, the contention windows can be determined based on priority classes assigned to the data. In one exemplary implementation a first priority class may be assigned to the following parameters: p0=7, CWmin=15, CWmax= 1023, maximum COT (channel occupancy time)=6ms. A second priority class may be assigned to the following parameters: p0=3, CWmin=15, CWmax= 1023, maximum COT=6ms. A third priority class may be assigned to the following parameters: p0=2, CWmin=7, CWmax= 15, maximum COT=4ms. A fourth priority class may be assigned to the following parameters: p0=2, CWmin=3, CWmax= 7, maximum COT=2ms.

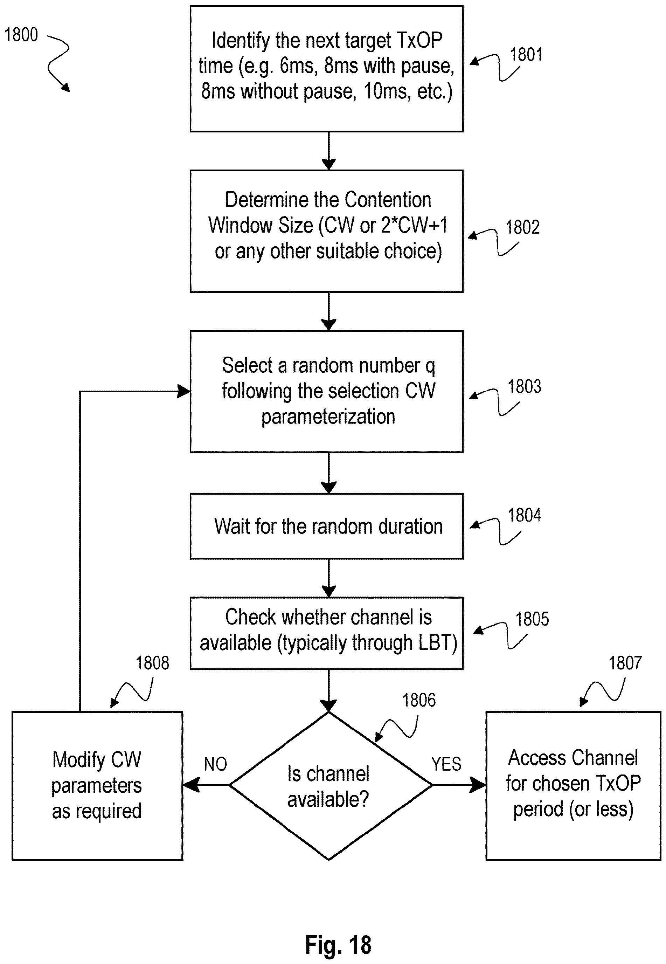

Fig. 18 is a schematic diagram illustrating a channel access procedure 1800 with contention window size depending on TxOP duration according to the disclosure.

The channel access procedure 1800 is an implementation for the determining and/or changing of the backoff parameter and contention window size CW as described above with respect to Fig. 17.

The channel access procedure 1800 includes a first block 1801 including: Identifying the next target TxOP tiem (e.g. 6ms, 8ms with pause, 8ms without pause, 10ms, etc.). It follows a second block 1802 including: Determining the contention window size (CW or 2*CW+1 or any other suitable choice). It follows a third block 1803 including: Selecting a random number q following the selection CW parameterization. It follows a fourth block 1804 including: Waiting for the random duration. It follows a fifth block 1805 including: Checking whether channel is available (typically through LBT). It follows a sixth block 1806 including: Checking if channel is available. If yes, i.e. channel is available, it follows a seventh block 1807 including: Accessing channel for chosen TxOP period (or less). If no, i.e. channel is not available, it follows an eighth block 1808 including: Modifying CW parameters as required and moving to the third block 1803.

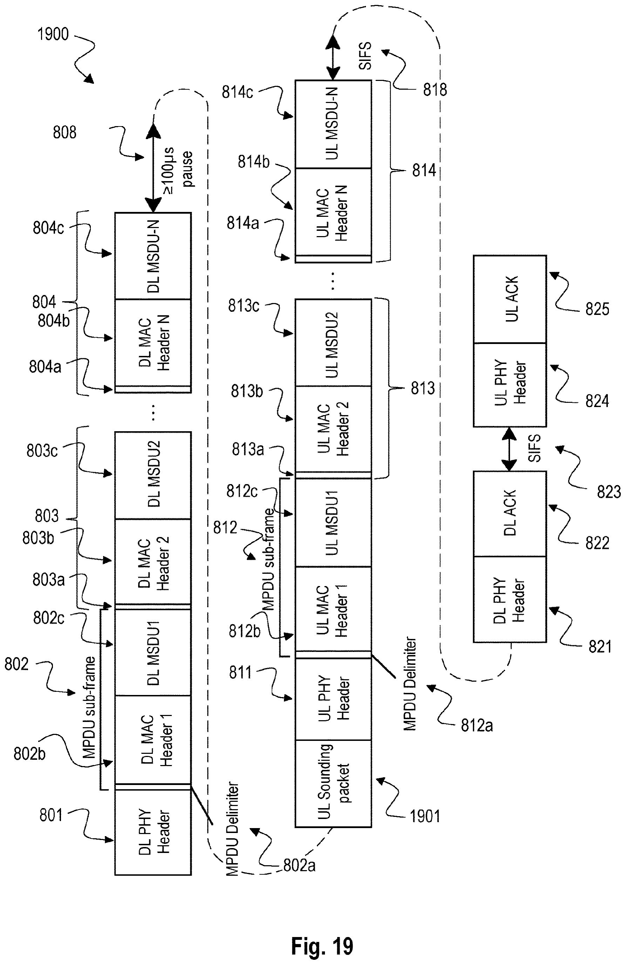

Fig. 19 is a schematic diagram illustrating the frame structure 1900 with UL Sounding according to the disclosure. The frame 1900 may correspond to the WiFi frame 800 described above with respect to Fig. 8 in which an UL sounding packet 1901 is included after the pause section 808.

In case of SU/MU MIMO, one approach is to use the longest TxOP times available (typically, 10ms). The sounding packets may be included at the start of the UL period, i.e. before UL PHY header 811 in the frame 800 such that the data packets are immediately following the sounding packets 1901 in time). This increases the efficiency of sounding - in previous implementations, often sounding sequences are allocated to previous frames and need to be used during a number of subsequent frames (because of the previous limitations of the TxOP durations). In the disclosed approach, this drawback is resolved. Figure 19 shows a possible implementation of this approach.

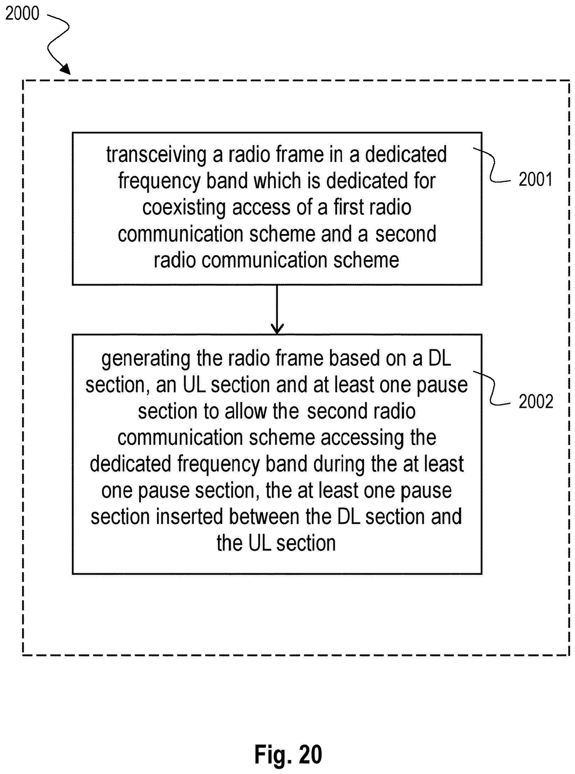

Fig. 20 is a schematic diagram illustrating a method 2000 for processing a radio frame according to the disclosure.

The method 2000 includes transceiving 2001 a radio frame in a dedicated frequency band which is dedicated for coexisting access of a first, e.g. a license assisted access (LAA) based radio communication scheme and a second, e.g. a non-LAA based radio communication scheme, e.g. according to the functionality of the transceiver 301 described above with respect to Fig. 3. The method 2000 further includes generating 2002 the radio frame based on a downlink (DL) section, an uplink (UL) section and at least one pause section to allow the second radio communication scheme accessing the dedicated frequency band during the at least one pause section, wherein the at least one pause section is inserted between the DL section and the UL section, e.g. according to the functionality of the frame generation circuit 302 described above with respect to Fig. 3.

The at least one pause section may have a time duration of at least 100 microseconds. The method 2000 may further include inserting the at least one pause section into the radio frame after a maximum channel occupancy time of 6 milliseconds. The method 2000 may further include separating the downlink section from the uplink section of the radio frame by the at least one pause section. The dedicated frequency band may include a 5 GHz Industrial, Scientific and Medical (ISM) band. The non-LAA based radio communication scheme may include a WiFi communication scheme. The LAA based radio communication scheme may include a MuLTEfire communication scheme. The dedicated frequency band may be dedicated for coexisting access according to the ETSI EN 301 893 specification.

In an alternative implementation prioritization of UL frames can be realized. For example UL data with high priority can be send before the pause section where access to the channel is available while UL data with medium or low priority can be send after the pause section where the probability of losing the channel access and thus being unable to transmit due to a neighboring transmission of a coexisting radio communication scheme is high. In one example, such UL blocks that were not transmitted due to losing the channel access can be set to a higher priority when transmitting a second time, e.g. such that these UL blocks are transmitted before the pause section in a second transmission. This prioritization concept can be implemented in the BS circuitry 300 described above with respect to Fig. 3 or in the STA circuitry 400 described above with respect to Fig. 4.

The methods, systems and devices described herein may be implemented in WiFi and/or LAA and/or MuLTEfire components which can be used independently or embedded in a larger system, such as a Smartphone, SoC, Laptop, Tablet, etc. Also, it is possible that external atenna(s), power supply or similar are connected. The methods, systems and devices described herein may be key for future LAA/MuLTEfire as well as WiFi products.

The methods, systems and devices described herein may be implemented as software in a Digital Signal Processor (DSP), in a micro-controller or in any other side-processor or as hardware circuit on a chip or within an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 2000 as described above with respect to Fig. 20 and the computing blocks performed by the blocks 302, 301, 402, 401 described above with respect to Figures 3 and 4. Such a computer program product may include a readable storage medium storing program code thereon for use by a processor, the program code comprising instructions for performing the method 2000 or the blocks 301, 302, 401, 402 as described above.

In addition, while a particular feature or aspect of the invention may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the invention may be implemented in discrete circuits, partially integrated circuits or fully integrated circuits or programming means. Also, the terms "exemplary", "for example" and "e.g." are merely meant as an example, rather than the best or optimal.

## Claims

1. A circuitry (300) of a base station, comprising:
A transceiver circuit (301), configured to transceive a radio frame (303) to a mobile terminal in a dedicated frequency band which is dedicated for coexisting access of a license assisted access, LAA, based radio communication scheme and a non-LAA based radio communication scheme; and
a frame generation circuit (302), configured to generate the radio frame (303) based on a downlink, DL, section (201), an uplink, UL, section (202) and at least one pause section (203) to allow the non-LAA based radio communication scheme accessing the dedicated frequency band during the at least one pause section (203),
wherein the frame generation circuit is configured to generate the radio frame comprising a DL section and an UL section and to insert the at least one pause section between the DL section and the UL section of the radio frame,
wherein the frame generation circuit is configured to estimate the scheduling delay, the propagation delay and processing delay required in the mobile terminal and to choose a duration of the at least one pause section to be at least 100 microseconds and to accommodate for those delays such that the mobile terminal is able to decode the DL section and to be ready to request a corresponding HARQ retransmission when the UL section starts.

2. The circuitry (300) of claim 1,
wherein the frame generation circuit (302) is configured to generate the radio frame (303) comprising a downlink (DL) section and to insert the at least one pause section (203) into the DL section of the radio frame.

3. The circuitry (300) of claim 1 or 2,
wherein the frame generation circuit is configured to generate the radio frame comprising an uplink (UL) section and to insert the at least one pause section into the UL section of the radio frame.

4. The circuitry (300) of any one of claims 1 to 3, wherein the frame generation circuit is configured to insert the at least one pause section in the DL section and between the DL section and the UL section of the radio frame.

5. The circuitry (300) of any one of claims 1 to 3, wherein the frame generation circuit is configured to insert the at least one pause section in the UL section and between the DL section and the UL section of the radio frame.

6. The circuitry (300) of any one of claims 1 to 3, wherein the frame generation circuit is configured to insert the at least one pause section in the DL section and in the UL section and between the DL section and the UL section of the radio frame.

7. A method (2000) for processing a radio frame by a base station, the method comprising:
transceiving (2001) a radio frame to a mobile terminal in a dedicated frequency band which is dedicated for coexisting access of a first radio communication scheme and a second radio communication scheme; and
generating (2002) the radio frame based on a downlink, DL, section, an uplink, UL, section and at least one pause section to allow the second radio communication scheme accessing the dedicated frequency band during the at least one pause section,
wherein the at least one pause section is inserted between the DL section and the UL section,
wherein the scheduling delay, the propagation delay and processing delay required in the mobile terminal are estimated and a duration of the at least one pause section is chosen to be at least 100 microseconds and to accommodate for those delays such that the mobile terminal is able to decode the DL section and to be ready to request a corresponding HARQ retransmission when the UL section starts.

8. A computer readable non-transitory medium on which computer instructions are stored which when executed by a computer cause the computer to perform the method (2000) of claim 7.

## Patentansprüche

1. Schaltung (300) einer Basisstation, umfassend:
eine Transceiverschaltung (301), die dazu ausgelegt ist, einen Funkframe (303) an ein mobiles Endgerät in einem zugehörigen Frequenzband zu senden und zu empfangen, das für koexistierenden Zugriff eines auf lizenzunterstützten Zugriff, LAA, basierten Funkkommunikationsschemas und eines nicht-LAA-basierten Funkkommunikationsschemas festgelegt ist; und
eine Frameerzeugungsschaltung (302), die dazu ausgelegt ist, den Funkframe (303) basierend auf einem Downlink-,DL,-Abschnitt (201), einem Uplink-,UL,-Abschnitt (202) und mindestens einem Pausenabschnitt (203) zu erzeugen, um dem nicht-LAA-basierten Funkkommunikationsschema den Zugriff auf das zugehörige Frequenzband während des mindestens einen Pausenabschnitts (203) zu erlauben,
wobei die Frameerzeugungsschaltung dazu ausgelegt ist, den Funkframe zu erzeugen, der einen DL-Abschnitt und einen UL-Abschnitt umfasst, und den mindestens einen Pausenabschnitt zwischen dem DL-Abschnitt und dem UL-Abschnitt des Funkframes einzufügen,
wobei die Frameerzeugungsschaltung dazu ausgelegt ist, die Planungsverzögerung, die Ausbreitungsverzögerung und die Verarbeitungsverzögerung, die in dem mobilen Endgerät erforderlich sind, abzuschätzen und eine Dauer des mindestens einen Pausenabschnitts so zu wählen, dass sie mindestens 100 Mikrosekunden beträgt, und diese Verzögerungen so zu berücksichtigen, dass das mobile Endgerät in der Lage ist, den DL-Abschnitt zu decodieren und bereit zu sein, eine entsprechende HARQ-Wiederübertragung anzufordern, wenn der UL-Abschnitt beginnt.

2. Schaltung (300) nach Anspruch 1,
wobei die Frameerzeugungsschaltung (302) dazu ausgelegt ist, den Funkframe (303) zu erzeugen, der einen Downlink-,DL,-Abschnitt umfasst, und den mindestens einen Pausenabschnitt (203) in den DL-Abschnitt des Funkframes einzufügen.

3. Schaltung (300) nach Anspruch 1 oder 2,
wobei die Frameerzeugungsschaltung dazu ausgelegt ist, den Funkframe zu erzeugen, der einen Uplink-,UL,-Abschnitt umfasst, und den mindestens einen Pausenabschnitt in den UL-Abschnitt des Funkframes einzufügen.

4. Schaltung (300) nach einem der Ansprüche 1 bis 3, wobei die Frameerzeugungsschaltung dazu ausgelegt ist, den mindestens einen Pausenabschnitt in den DL-Abschnitt und zwischen den DL-Abschnitt und den UL-Abschnitt des Funkframes einzufügen.

5. Schaltung (300) nach einem der Ansprüche 1 bis 3, wobei die Frameerzeugungsschaltung dazu ausgelegt ist, den mindestens einen Pausenabschnitt in den UL-Abschnitt und zwischen den DL-Abschnitt und den UL-Abschnitt des Funkframes einzufügen.

6. Schaltung (300) nach einem der Ansprüche 1 bis 3, wobei die Frameerzeugungsschaltung dazu ausgelegt ist, den mindestens einen Pausenabschnitt in den DL-Abschnitt und in den UL-Abschnitt und zwischen den DL-Abschnitt und den UL-Abschnitt des Funkframes einzufügen.

7. Verfahren (2000) zur Verarbeitung eines Funkframes durch eine Basisstation, wobei das Verfahren umfasst:
Senden und Empfangen (2001) eines Funkframes an ein mobiles Endgerät in einem zugehörigen Frequenzband, das für den koexistierenden Zugriff eines ersten Funkkommunikationsschemas und eines zweiten Funkkommunikationsschemas festgelegt ist; und
Erzeugen (2002) des Funkframes basierend auf einem Downlink-,DL,-Abschnitt, einem Uplink-,UL,-Abschnitt und mindestens einem Pausenabschnitt, um dem zweiten Funkkommunikationsschema den Zugriff auf das zugehörige Frequenzband während des mindestens einen Pausenabschnitts zu erlauben,
wobei der mindestens eine Pausenabschnitt zwischen dem DL-Abschnitt und dem UL-Abschnitt eingefügt ist,
wobei die Planungsverzögerung, die Ausbreitungsverzögerung und die Verarbeitungsverzögerung, die in dem mobilen Endgerät erforderlich sind, geschätzt werden, und eine Dauer des mindestens einen Pausenabschnitts so gewählt wird, dass sie mindestens 100 Mikrosekunden beträgt und um diese Verzögerungen so zu berücksichtigen, dass das mobile Endgerät in der Lage ist, den DL-Abschnitt zu decodieren und bereit zu sein, eine entsprechende HARQ-Wiederübertragung anzufordern, wenn der UL-Abschnitt beginnt.

8. Computerlesbares, nichtflüchtiges Medium, auf dem Computerbefehle gespeichert sind, die, wenn sie von einem Computer ausgeführt werden, den Computer veranlassen, das Verfahren (2000) nach Anspruch 7 durchzuführen.

## Revendications

1. Circuits (300) d'une station de base, comprenant :
un circuit d'émission-réception (301), configuré pour émettre-recevoir une trame radio (303) vers et depuis un terminal mobile dans une bande de fréquences dédiée qui est dédiée pour un accès coexistant d'un plan de communication radio basé sur un accès assisté par licence, LAA et un plan de communication radio non basé sur un LAA ; et
un circuit de génération de trame (302), configuré pour générer la trame radio (303) en fonction d'un segment de liaison descendante, DL, (201), d'un segment de liaison montante, UL, (202) et d'au moins un segment de pause (203) pour permettre au plan de communication radio non basé sur un LAA d'accéder à la bande de fréquences dédiée durant l'au moins un segment de pause (203),
dans lequel le circuit de génération de trame est configuré pour générer la trame radio comprenant un segment de DL et un segment d'UL et insérer l'au moins un segment de pause entre le segment de DL et le segment d'UL de la trame radio,
dans lequel le circuit de génération de trame est configuré pour estimer le retard d'ordonnancement, le retard de propagation et le retard de traitement requis dans le terminal mobile et choisir une durée de l'au moins un segment de pause à au moins 100 microsecondes et tenir compte de ces retards de telle sorte que le terminal mobile soit en mesure de décoder le segment de DL et soit prêt à demander une retransmission HARQ correspondante quand le segment d'UL commence.

2. Circuits (300) selon la revendication 1,
dans lesquels le circuit de génération de trame (302) est configuré pour générer la trame radio (303) comprenant un segment de liaison descendante (DL) et insérer l'au moins un segment de pause (203) dans le segment de DL de la trame radio.

3. Circuits (300) selon la revendication 1 ou 2,
dans lesquels le circuit de génération de trame est configuré pour générer la trame radio comprenant un segment de liaison montante (UL) et insérer l'au moins un segment de pause dans le segment d'UL de la trame radio.

4. Circuits (300) selon l'une quelconque des revendications 1 à 3,
dans lesquels le circuit de génération de trame est configuré pour insérer l'au moins un segment de pause dans le segment de DL et entre le segment de DL et le segment d'UL de la trame radio.

5. Circuits (300) selon l'une quelconque des revendications 1 à 3,
dans lesquels le circuit de génération de trame est configuré pour insérer l'au moins un segment de pause dans le segment d UL et entre le segment de DL et le segment d'UL de la trame radio.

6. Circuits (300) selon l'une quelconque des revendications 1 à 3,
dans lequel le circuit de génération de trame est configuré pour insérer l'au moins un segment de pause dans le segment de DL et dans le segment d'UL et entre le segment de DL et le segment d'UL de la trame radio.

7. Procédé (2000) de traitement d'une trame radio par une station de base, le procédé comprenant :
l'émission-réception (2001) d'une trame radio vers et depuis un terminal mobile dans une bande de fréquences dédiée qui est dédiée pour un accès coexistant d'un premier plan de communication radio et d'un second plan de communication radio ; et
la génération (2002) de la trame radio en fonction d'un segment de liaison descendante, DL, d'un segment de liaison montante, UL, et d'au moins un segment de pause pour permettre au second plan de communication radio d'accéder à la bande de fréquences dédiée durant l'au moins un segment de pause,
dans lequel l'au moins un segment de pause est inséré entre le segment de DL et le segment d'UL,
dans lequel le retard d'ordonnancement, le retard de propagation et le retard de traitement requis dans le terminal mobile sont estimés et une durée de l'au moins un segment de pause est choisie à au moins 100 microsecondes et tenir compte de ces retards de telle sorte que le terminal mobile soit en mesure de décoder le segment de DL et soit prêt à demander une retransmission HARQ correspondante quand le segment d'UL commence.

8. Support non transitoire lisible par ordinateur sur lequel sont mémorisées des instructions d'ordinateur qui, à leur exécution par un ordinateur, amènent l'ordinateur à réaliser le procédé (2000) selon la revendication 7.
